(19) Europäisches Patentamt
European Patent Office
Office européen des brevets

(11) **EP 1 662 714 B1**

(12) **EUROPEAN PATENT SPECIFICATION**

(45) Date of publication and mention
of the grant of the patent:
**08.07.2009 Bulletin 2009/28**

(51) Int Cl.:
*H04L 12/40* (2006.01)  *B60R 16/02* (2006.01)
*G06F 11/22* (2006.01)

(21) Application number: **04106151.6**

(22) Date of filing: **29.11.2004**

(54) **Method for controlling start-up of network communication in a communication network**

Verfahren zur Start-Up-Kontrolle von Netzkommunikation in einem Kommunikationsnetz

Procédé pour le contrôle du démarrage de communication par réseau dans un réseau de communication

(84) Designated Contracting States:
**AT BE BG CH CY CZ DE DK EE ES FI FR GB GR HU IE IS IT LI LU MC NL PL PT RO SE SI SK TR**

(43) Date of publication of application:
**31.05.2006 Bulletin 2006/22**

(73) Proprietor: **Scania CV AB (publ)**
**151 87 Södertälje (SE)**

(72) Inventor: **Johansson, Jonny**
**146 31, Tullinge (SE)**

(74) Representative: **Thum, Bernhard**
**Wuesthoff & Wuesthoff**
**Patent- und Rechtsanwälte**
**Schweigerstrasse 2**
**81541 München (DE)**

(56) References cited:
**EP-A- 1 355 460**      **US-A- 5 696 904**

• **TEMPLE C: "Avoiding the babbling-idiot failure in a time-triggered communication system" FAULT-TOLERANT COMPUTING, 1998. DIGEST OF PAPERS. TWENTY-EIGHTH ANNUAL INTERNATIONAL SYMPOSIUM ON MUNICH, GERMANY 23-25 JUNE 1998, LOS ALAMITOS, CA, USA,IEEE COMPUT. SOC, US, 23 June 1998 (1998-06-23), pages 218-227, XP010291298 ISBN: 0-8186-8470-4**

## Description

## Technical field

The present invention generally relates to system and methods for controlling start-up of network communication in a communication network, and more specifically to a system and a method for controlling start-up of network communication in a communication network of a vehicle, for example, in networks using serial protocols such as RS232 or Ethernet, or networks such as a controller area network or time triggered controller area networks. The invention further relates to a computer readable medium comprising instructions for bringing a computer to perform such a method, a computer program for an electronic control unit arranged in a communication network, and an electronic control unit for such a network.

## Background art

In modem vehicles, there are a large number of electronic control units, for example, engine management system, brake management system, gearbox management system, suspension management system, etc., wherein each system controls specific functions, parts or subsystems of the vehicle, interconnected in a communication network, for example, a Controller Area Network (CAN).

When entering a new communication mode, for example, at start-up of the network at receipt of an ignition signal, each electronic control unit required to be active in the new communication mode transmits or sends out messages, for example, wake-up signals to other electronic control units required to be active in the communication mode, for example, electronic control units associated with functions necessary for a specific activated electronic control unit in order to verify that these specific electronic control units are working properly. When an electronic control unit receives such a message from another control unit, it is notified that this unit is operative and is working properly. In this way, the receiving electronic control unit can verify that all electronic control units it communicates with in this communication mode is operative and that the communications is working properly by checking that all messages has been received. For each absent message, the electronic control unit generates and stores a diagnostic trouble code indicating that it has occurred an error in the electronic control unit associated with the lacking message or in the network connection to the electronic control unit.

At initiating of certain communication modes of the network, there is a significant amount of data that is processed in each control unit, which may lead to that the sending control unit receives certain messages after a relatively long period of time, in some case up to a number of seconds, after the initiation of the network communication, which may lead to generation of false diagnostic trouble codes in the electronic control unit.

Moreover, at initiating of certain communication modes of the network, the network communication is very heavy or frequent, for example, due to the fact that there are large number of electronic control units transmitting a large number of messages, which may lead to delays in the communication. This may, in turn, entail that an electronic control unit may receive certain messages after a relatively long period of time, in some cases up to a number of seconds, after the initiation, which also may lead to generation of false diagnostic trouble codes in the electronic control unit.

A number of solutions have been developed in order to obtain a controlled start-up of the network communication in communication network of vehicles, such as trucks. One example is disclosed by EP 1355460 A, where a method for monitoring a communication media access schedule of a communication controller of a communication system by means of a bus guardian is disclosed. The communication system comprises a communication media and nodes connected to the communication media. Each node comprises a communication controller and a bus guardian assigned to the communication controller. Messages are transmitted among the nodes across the communication media based on a cyclic time triggered communication media access scheme. In order to provide a mechanism which allows the bus guardian to monitor the communication media access scheme of the communication controller even during startup of the communication it is suggested, that the bus guardian has a priori knowledge about possible deviations from the communication media access schedule during startup of the communication and that the bus guardian during startup makes use of the a priori knowledge to distinguish between an allowed deviation and a forbidden deviation caused by a failure of the communication controller.

Consequently, there is a great need of a system and a method for controlling the start-up of the network communication in a communication network of a vehicle, and in particular, in networks, for example, in networks using serial protocols such as RS232 or Ethernet, networks such as a controller area network or a time triggered controller area network (TT-CAN) of a truck, that prevent false diagnostic trouble codes from being generated during the start-up at the same time as a fast and reliable start-up procedure is obtained.

## Disclosure of the invention

Thus, an object of the present invention is to provide a method and a system for controlling the start-up of the network communication in a communication network of a vehicle, and in particular, in a network, for example, in networks using serial protocols such as RS232 or Ethernet, and networks such as a controller area network or a time triggered controller area network, that at least decreases the generation of false diagnostic trouble codes during the start-up.

Another object of the invention is to provide a method and a system that provides for a fast and reliable start-up procedure of the network communication in a communication network of a vehicle. These and other objects are achieved according to the present invention by providing a method, a system, an electronic control unit, and a computer program having the features defined in the independent claims. Different embodiments are defined in the dependent claims.

Thus, the present invention is based on the idea of distributing the controlling and/or monitoring of the start-up of the network communication in a communication network of a vehicle, such as a CAN of a truck, to the individual electronic control units included in the network and defining individual rules for each control unit, which are periods of time. By distributing the controlling and/or monitoring functions to the different control units of the network, a fast and reliable start-up procedure of the network communication in the network can be obtained in the same time as false diagnostic trouble codes can be prevented from being generated or stored.

An advantage is that the start up of the network communication is more reliable and more efficient since for each message a different specific period of time can be determined, using which the respective message is defined as absent or not.

An additional advantage is that false diagnostic trouble codes can be prevented from being generated by means of the predetermined rules, which can be individually adapted for each control unit.

The predetermined rules for determining whether the message is absent or not is a period of time, and, if the message is received after this period has elapsed or not at all, the message is determined as absent. Thereby, false diagnostic trouble codes can be prevented from being generated in an efficient way. This period of time is based on a point of time when all electronic control units of the network have started their transmission of messages, and the update rate for a specific message. The update rate is the interval between two successive messages and a long interval between two successive messages entails accordingly a slow update rate. The message having the slowest update rate is used.

According to the present invention, each message is associated with a specific predetermined period of time. Accordingly, a specific message is determined as absent only if the specific period of time associated with the specific signal has elapsed before the signal was received. Each of these periods of time are based on a point of time when all electronic control units of the network have started their transmission of messages, and the update rate for the specific message, wherein the update rate is the intervals at which the message is sent out.

As realized by the person skilled in the art, the method of the present invention, as well as embodiments thereof, is suitable to realize or implement with the help of a computer program or a computer readable medium.

Further objects and advantages of the present invention will be discussed below by means of exemplifying embodiments.

Brief description of the drawings

Embodiments of the invention will now be described in greater detail with reference to the accompanying drawings, in which

Fig. 1    schematically shows a communication network in which the invention can be implemented;

Fig. 2    schematically shows an electronic control unit in accordance with an embodiment of the present invention;

Fig. 3    schematically shows a time line indicating different points of time of a start-up procedure in accordance with the present invention; and

Fig. 4    is a flow diagram showing the general principles according to one embodiment of the method for controlling start-up of the network communication of the electronic control unit shown in fig. 2 arranged in a communication network shown in fig.1.

**Mode(s) for carrying out the invention**

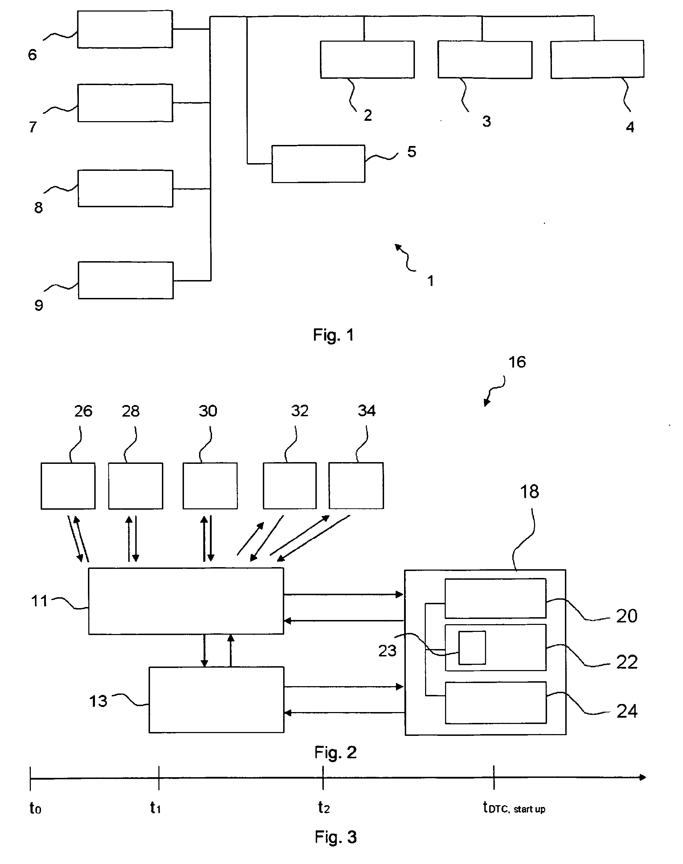

With reference first to fig. 1, a communication network in which the invention can be implemented will be discussed. In Fig. 1, the illustrated network is a CAN for a vehicle, such as a truck, but it should be noted that the invention can be implemented in other types of networks, for example networks using serial protocols such as RS232 or Ethernet or in a time triggered controller area network. A large number of electronic control units are interconnected in a network and are capable of communicating which each other. Each control unit controls a specific sub-system, device or unit of the vehicle. The communication network 1, for example a CAN or TT-CAN comprises an engine management system 2, a brake management system 3, a gearbox management system 4, a locking and alarm system 5, an audio system 6, a crash safety system 7, an automatic climate control 8, and a clock and timer system 9. It should, however, be noted that the control units shown in fig. 1 only are exemplifying and a non-exhaustive disclosure.

Referring now to fig. 2, an electronic control unit in accordance with an embodiment of the present invention will be discussed. For example, the electronic control unit is arranged in a system as shown in fig. 1. The electronic control unit 16 comprises a computer readable medium, for example, a storage means or storage media indicated generally by reference numeral 18 for storing data representing instructions executable by a computer to control or monitor a sub-system, device or a unit of the vehicle, for example, the brake system. Computer readable medium18 may also comprise calibration information in addition to working variables, parameters, and the like. In this embodiment, computer readable medium 18 comprises a random access memory (RAM) 20 in addition to various non-volatile memories such as read-only memory (ROM) 22 and keep-alive memory (KAM) 24. In this embodiment, the read-only memory 22 comprises a computer program 23 comprising instructions for bringing a computer to perform method steps in accordance with the present invention. Computer readable storage media 20 communicates with processing means or a microprocessor 11 and input/output (I/O) circuitry 13 via a standard control/address bus (not shown). As will be appreciated by one of ordinary skill in the art, computer readable storage media may comprise various types of physical devices for temporary and/or persistent storage of data which comprises solid state, magnetic, optical and combination devices. For example, the computer readable storage media may be implemented using one or more physical devices such as a hard-drive, DRAM, PROMS, EPROMS, EEPROMS, flash memory, and the like. Depending upon the particular application, the computer readable storage media may also comprises floppy disks, CD ROM, and the like. Furthermore, the electronic control unit 16 comprises initiating means 26 arranged to initiate a network communication by transmitting a set of messages, for example, wake-up signals, to other electronic control units of the network required to be active in the present communication mode, monitoring means 28 arranged to monitor whether predetermined messages are received by the electronic control unit, i.e. messages from other electronic control units required to be activated upon entry in the present communication mode. The electronic control unit 16 also comprises determining means 30 arranged to determine whether the communication messages are received in accordance with predetermined rules, which are period of times, defining means 32 arranged to define a message as absent if not received in accordance with the predetermined rules, i.e. within a predetermined period of time, and generating means 34 arranged to generate a diagnostic trouble code for each absent message, each means 26-32 being connected to the microprocessor 11. As the skilled person realizes, the above mentioned means 26-32 can be stand-alone devices, as in fig. 2, or can be integrated in the processing means or the microprocessor 11. The determining means 30 is arranged to determine a message as absent if it not was received within a preset period of time, i.e. the predetermined rule is accordingly the following: if a message is not received within a preset period of time, the signal is considered as not received or absent. This period of time is set to:

$$t_{DTC,start-up} \geq t_2 + x * T_{max}$$

, wherein, as will be explained in more detail below, $t_{DTC, start-up}$ is the shortest time before the first diagnostic trouble code related to the communication is allowed to be stored after start-up, $t_2$ is the time after ignition of the network or after the network has entered a new communication mode, x is an arbitrary number between zero and infinity, and $T_{MAX}$ is the slowest update rate for a specific message in the electronic control unit. In one embodiment, x is set to three but can be adjusted in accordance with the conditions of the specific control unit. As an example, if a message has a $T_{MAX} = 100$ mS and $t_2 < 1000$ mS, $t_{DTC} = 1000 + 3*100 = 1300$ mS.

Consequently, the defining means 32 is not allowed to define a message as absent until a time period of 1300 mS, after a start-up signal has elapsed.

The predetermined rules for determining whether the message is absent or not is a preset period of time for each message. Accordingly, a specific message is determined as absent only if the specific period of time associated with the specific signal has elapsed before the signal was received. Each of these periods of time are based on a point of time when all electronic control units of the network have started their transmission of messages, and the update rate for the specific message, wherein the update rate is the intervals at which the message is sent out. According to this a specific period of time can be set to:

$$t_{DTC,start-up,y} \geq t_2 + x * T_y$$

, wherein $t_{DTC, start-up,y}$ is the shortest time before the diagnostic trouble code related to message y is allowed to be stored after start-up, $t_2$ is the time after ignition of the network or after the network has entered a new communication mode, x is an arbitrary number between zero and infinity, and $T_y$ is the longest update rate for message y in the electronic control unit. That is, the longest period of time between two successive transmissions of the message y.

With reference now to fig. 3, a time line indicating the different points of time discussed above is shown. As mentioned above, to indicates time for ignition or an other wake-up signal received by the electronic control unit, $t_1$ indicates the earliest point of time after to when a control unit has to be ready to receive a message from another control unit of the network. This point of time differs between different control units. The point of time $t_2$ indicates, as mentioned above, the point of time after to where all control units required to be active in the specific communication mode must have started their transmission of messages, i.e. the electronic control unit must have started the transmission of all the inquiry messages. Furthermore, this point of time will also be different for different control units. It should be noted that the point of time $t_2$ never can occur before the point of time $t_1$ in a single control unit, but the point of time $t_2$ for one control unit can occur before the point of time $t_1$ for another control unit in the same network. Furthermore, $t_{DTC, start-up}$

indicates the shortest time before the first diagnostic trouble code related to the communication is allowed to be stored, directly after start up.

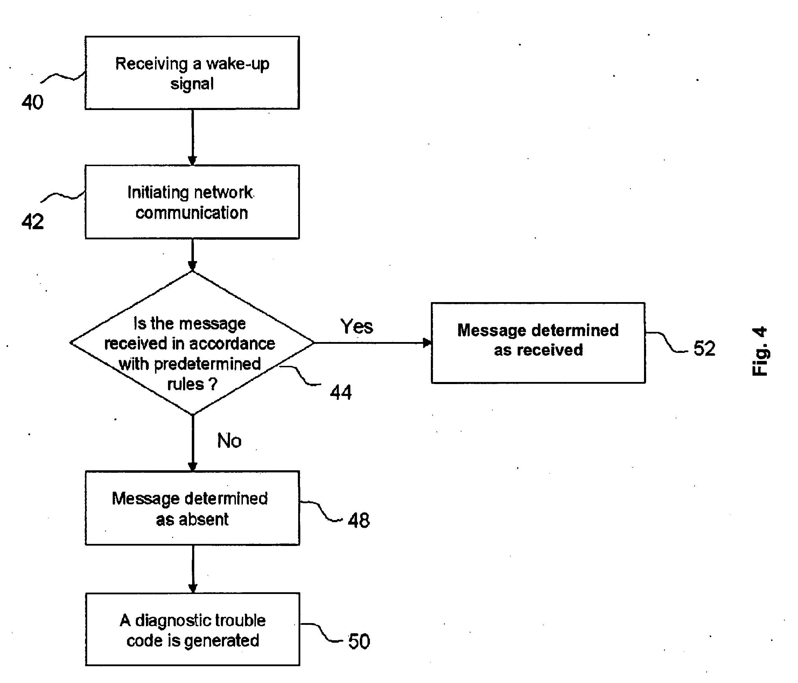

With reference now to fig. 4, the general principles according to one embodiment of the method for controlling start-up of the network communication of the electronic control unit shown in fig. 2 arranged in a communication network, for example, the network shown in fig. 1 will be described.

Firstly, at step 40, the electronic control unit receives a wake-up signal or an ignition signal, i.e. at to (see fig. 3). Then, at step 42, the network communication from the electronic control unit is initiated by the transmittal of a set of messages, for example, start-up signals to other electronic control units required to be active in the present communication mode of the communication network. As discussed above with reference to figs. 2 and 3, all messages must have been sent at the latest at the point of time $t_2$. At step 44, it is monitored whether messages are received from each of the electronic control units required to be active in the present communication mode, and for each received message it is determined whether the message(-s) is received in accordance with predetermined rules or not, which, for example, are defined by a period of time as discussed above.

Then, in step 48, if the message is not received in accordance with the predetermined rules, i.e. if the message is received after the predetermined period of time $t_{DTC, start-up}$ has elapsed (or not received at all), the message is determined as absent. Subsequently, at step 50, a diagnostic trouble code is generated and stored in the storage media 18 of the controller unit 16. On the other hand, if the message is determined as being received in accordance with the rules, i.e. within the predetermined period of time, the message is considered, in step 52, as received and no diagnostic trouble code is generated.

Although specific embodiments have been shown and described herein for purposes of illustration and exemplification, it is understood by those of ordinary skill in the art that the specific embodiments shown and described may be substituted for a wide variety of alternative and/or equivalent implementations without departing from the scope of the present invention. Those of ordinary skill in the art will readily appreciate that the present invention could be implemented in a wide variety of embodiments, comprising hardware and software implementations, or combinations thereof. This application is intended to cover any adaptations or variations of the embodiments discussed herein. Consequently, the present invention is defined by the wordings of the appended claims and equivalents thereof.

**Claims**

1. A method for controlling start-up of network communication of a communication mode between electronic control units, being active in said communication mode, arranged in a communication network (1) of a vehicle, comprising the steps of:

   - determining a point of time when all electronic control units of the network required to be active in said communication mode have started their transmission of messages after ignition or another wake-up signal;
   - determining, for each message, a specific period of time based on the longest specific update rate for the respective message and the determined point of time, wherein the longest specific update rate for the respective message is the longest interval between two successive transmissions of the respective message;
   - monitoring, in each electronic control unit (16) being active in said communication mode, messages received from at least one other control unit of said network required to be active in said communication mode;
   - determining, for each received message in each control unit (16) being active in said communication mode, whether the received message has been received from at least one other electronic control unit of said network within the determined specific period of time (44);
   - defining a message as absent if not received within said determined specific period of time (48); and
   - generating a diagnostic trouble code for each message defined as absent (50).

2. Method according to any one of preceding claims, further comprising the step of storing said generated diagnostic trouble codes.

3. Method according to any one of preceding claims 1-2 wherein the length of said specific period of time for a message y is

$$t_{DTC,start-up,y} \geq t_2 + x * T_y$$

wherein $t_{DTC.start-up,y}$ is the shortest time before the first diagnostic trouble code related to the message y is allowed to be stored after start-up, $t_2$ is the time after ignition of said network or after said network has entered a new communication mode, x is an arbitrary number between zero and infinity, and $T_y$ is the longest specific update rate for message y of said electronic control unit.

4. A system for controlling start-up of network communication of a communication mode between electronic control units, being active in said communication mode, arranged in a communication network (1) of a vehicle, comprising:

> means for determining a point of time when all electronic control units of the network required to be active in said communication mode have started their transmission of messages after ignition or another wake-up signal;
> means for determining, for each message, a specific period of time based on the longest specific update rate for the respective message and the determined point of time, wherein the longest specific update rate for the respective message is the longest interval between two successive transmissions of the respective message;
> means for monitoring, in each electronic control unit (16) being active in said communication mode, messages received from at least one other electronic control unit of said network required to be active in said communication mode, wherein each electronic control unit (16) comprises means for determining, for each received message, whether the received message has been received from at least one other electronic control unit of said network within the determined specific period of time (44);
> means for defining a message as absent if not received within said determined specific period of time (48); and
> means for generating a diagnostic trouble code for each message defined as absent (50).

5. System according to claim 4, further comprising means for storing said generated diagnostic trouble codes.

6. System according to claim 4 or 5, wherein the length of said specific period of time for a message y is

$$t_{DTC,start-up,y} \geq t_2 + x * T_y$$

wherein $t_{DTC, start-up,y}$ is the shortest time before the first diagnostic trouble code related to the message y is allowed to be stored after start-up, $t_2$ is the time after ignition of said network or after said network has entered a new communication mode, x is an arbitrary number between zero and infinity and $T_y$ is the longest specific update rate for the message y of said electronic control unit.

7. Computer program (23) for an electronic control unit (16) arranged in a communication network (1) of a vehicle for controlling start-up of network communication of a communication mode between the electronic control unit and other electronic control units arranged in the network, wherein said program comprises program instructions, which when ran on the electronic control unit, causes the electronic control unit to perform the steps of:

> determining a point of time when all electronic control units of the network required to be active in said communication mode have started their transmission of messages after ignition or another wake-up signal;
> determining, for each message, a specific period of time based on the longest specific update rate for the respective message and the determined point of time, wherein the longest specific update rate for the respective message is the longest interval between two successive transmissions of the respective message;
> monitoring messages received from at least one other electronic control unit of said network required to be active in said communication mode;
> determining, for each received message, whether the received message has been received from at least one other electronic control unit of said network within the determined specific period of time (44);
> defining a message as absent if not received within said determined specific period of time (48); and
> generating a diagnostic trouble code for each message defined as absent (50).

8. Computer program product comprising computer readable medium and a computer program (23) according to claim 7, wherein said computer program (23) is stored on said computer readable medium.

9. Electronic control unit (16) arranged to be connected in a communication network (1) of a vehicle, said electronic control unit (16) being capable of controlling start-up of network communication of a communication mode with other electronic control units of the network, being active in said communication mode, comprising:

> means for determining a point of time when all electronic control units of the network required to be active in said communication mode have started their transmission of messages after ignition or another wake-up signal;
> means for determining, for each message, a specific period of time based on the longest specific update rate for the respective message and the determined point of time, wherein the longest specific update rate for the respective message is the longest interval between two successive transmissions of the respective message;
> means for monitoring messages received from at least one other electronic control unit of said network required to be active in said communication mode;

means for determining, for each received message, whether the received message has been received from at least one other electronic control unit of said network within the determined specific period of time (44);
means for defining a message as absent if not received within said determined specific period of time (48); and
means for generating a diagnostic trouble code for each message defined as absent (50).

**Patentansprüche**

1. Verfahren zum Steuern des Einleitens einer Netzwerk-Kommunikation eines Kommunikationsmodus zwischen elektronischen Steuereinheiten, die in dem Kommunikationsmodus aktiv sind und in einem Kommunikationsnetzwerk (1) eines Fahrzeugs angeordnet sind, umfassend die Schritte:

   - Bestimmen eines Zeitpunkts, an dem alle elektronischen Steuereinheiten des Netzwerks, die in dem Kommunikationsmodus aktiv sein müssen, ihre Übertragung von Nachrichten nach einem Starten oder einem anderen Aufwachsignal begonnen haben;
   - Bestimmen einer spezifischen Zeitspanne, für jede Nachricht, basierend auf der längsten spezifischen Aktualisierungs-Rate für die entsprechende Nachricht und dem bestimmten Zeitpunkt, wobei die längste spezifische Aktualisierungs-Rate für die entsprechende Nachricht das längste Zeitintervall zwischen zwei aufeinanderfolgenden Übertragungen der entsprechenden Nachricht ist;
   - Überwachen, in jeder elektronischen Steuereinheit (16), die in dem Kommunikationsmodus aktiv ist, von Nachrichten, die von mindestens einer anderen Steuereinheit des Netzwerks empfangen wurden, die in dem Kommunikationsmodus aktiv sein muss;
   - Bestimmen, für jede empfangene Nachricht in jeder Steuereinheit (16), die in dem Kommunikationsmodus aktiv ist, ob die empfangene Nachricht von mindestens einer anderen elektronischen Steuereinheit des Netzwerks innerhalb der bestimmten spezifischen Zeitspanne empfangen worden ist (44);
   - Definieren einer Nachricht als ausgeblieben, wenn sie nicht innerhalb der bestimmten spezifischen Zeitspanne empfangen wurde (48); und
   - Erzeugen eines Diagnose-Fehlercodes für jede als ausgeblieben definierte Nachricht (50).

2. Verfahren nach einem der vorhergehenden Ansprüche, weiter umfassend den Schritt des Speicherns des erzeugten Diagnose-Fehlercodes.

3. Verfahren nach einem der vorhergehenden Ansprüche 1 bis 2, wobei die Länge der spezifischen Zeitspanne für eine Nachricht y

$$t_{DTC,start-up,y} \geq t_2 + x * T_y$$

ist, wobei $t_{DTC,start-up,y}$ die kürzeste Zeit ist bevor der erste Diagnose-Fehlercode bezogen auf die Nachricht y nach dem Einleiten gespeichert werden darf, $t_2$ die Zeit ist nach Starten des Netzwerks oder nachdem das Netzwerk in einen neuen Kommunikationsmodus eingetreten ist, x eine beliebige Zahl zwischen Null und Unendlich ist und $T_y$ die längste spezifische Aktualisierungs-Rate für die Nachricht y der elektronischen Steuereinheit ist.

4. System zum Steuern des Einleitens einer Netzwerk-Kommunikation eines Kommunikationsmodus zwischen elektronischen Steuereinheiten, die in dem Kommunikationsmodus aktiv sind und in einem Kommunikationsnetzwerk (1) eines Fahrzeugs angeordnet sind, umfassend:

   Mittel zum Bestimmen eines Zeitpunkts, an dem alle elektronischen Steuereinheiten des Netzwerks, die in dem Kommunikationsmodus aktiv sein müssen, ihre Übertragung von Nachrichten nach einem Starten oder einem anderen Aufwachsignal begonnen haben;
   Mittel zum Bestimmen einer spezifischen Zeitspanne, für jede Nachricht, basierend auf der längsten spezifischen Aktualisierungs-Rate für die entsprechende Nachricht und dem bestimmten Zeitpunkt, wobei die längste spezifische Aktualisierungs-Rate für die entsprechende Nachricht das längste Zeitintervall zwischen zwei aufeinanderfolgenden Übertragungen der entsprechenden Nachricht ist;
   Mittel zum Überwachen, in jeder elektronischen Steuereinheit (16), die in dem Kommunikationsmodus aktiv ist, von Nachrichten, die von mindestens einer anderen elektronischen Steuereinheit des Netzwerks empfangen wurden, die in dem Kommunikationsmodus aktiv sein muss, wobei jede elektronische Steuereinheit (16) Mittel zum Ermitteln, für jede empfangene Nachricht, umfasst, ob die empfangene Nachricht von mindestens einer anderen elektronischen Steuereinheit des Netzwerks innerhalb der bestimmten spezifischen Zeitspanne empfangen worden ist (44);
   Mittel zum Definieren einer Nachricht als ausgeblieben, wenn sie nicht innerhalb der bestimmten spezifischen Zeitspanne empfangen wurde (48); und

Mittel zum Erzeugen eines Diagnose-Fehlercodes für jede als ausgeblieben definierte Nachricht (50).

5.  System nach Anspruch 4, weiter umfassend Mittel zum Speichern des erzeugten Diagnose-Fehlercodes.

6.  System nach Anspruch 4 oder 5, wobei die Länge der spezifischen Zeitspanne für eine Nachricht y

$$t_{DTC,start-up,y} \geq t_2 + x * T_y$$

ist, wobei $t_{DTC,start-up,y}$ die kürzeste Zeit ist bevor der erste Diagnose-Fehlercode bezogen auf die Nachricht y nach dem Einleiten gespeichert werden darf, $t_2$ die Zeit ist nach Starten des Netzwerks oder nachdem das Netzwerk in einen neuen Kommunikationsmodus eingetreten ist, x eine beliebige Zahl zwischen Null und Unendlich ist und $T_y$ die längste spezifische Aktualisierungs-Rate für die Nachricht y der elektronischen Steuereinheit ist.

7.  Computerprogramm (23) für eine elektronische Steuereinheit (16), die in einem Kommunikationsnetzwerk (1) eines Fahrzeugs angeordnet ist, zum Steuern des Einleitens einer Netzwerk-Kommunikation eines Kommunikationsmodus zwischen der elektronischen Steuereinheit und anderen in dem Netzwerk angeordneten elektronischen Steuereinheiten, wobei das Programm Programmanweisungen umfasst, welche, wenn sie in der elektronischen Steuereinheit ausgeführt werden, die elektronische Steuereinheit dazu bringen, die Schritte auszuführen:

Bestimmen eines Zeitpunkts, an dem alle elektronischen Steuereinheiten des Netzwerks, die in dem Kommunikationsmodus aktiv sein müssen, ihre Übertragung von Nachrichten nach einem Starten oder einem anderen Aufwachsignal begonnen haben;
Bestimmen einer spezifischen Zeitspanne, für jede Nachricht, basierend auf der längsten spezifischen Aktualisierungs-Rate für die entsprechende Nachricht und dem bestimmten Zeitpunkt, wobei die längste spezifische Aktualisierungs-Rate für die entsprechende Nachricht das längste Zeitintervall zwischen zwei aufeinanderfolgenden Übertragungen der entsprechenden Nachricht ist;
Überwachen von Nachrichten, die von mindestens einer anderen elektronischen Steuereinheit des Netzwerks empfangen wurden, die in dem Kommunikationsmodus aktiv sein muss;
Bestimmen, für jede empfangene Nachricht, ob die empfangene Nachricht von mindestens einer anderen elektronischen Steuereinheit des Netzwerks innerhalb der bestimmten spezifischen Zeitspanne empfangen worden ist (44);
Definieren einer Nachricht als ausgeblieben, wenn sie nicht innerhalb der bestimmten spezifischen Zeitspanne empfangen wurde (48); und
Erzeugen eines Diagnose-Fehlercodes für jede als ausgeblieben definierte Nachricht (50).

8.  Computerprogrammprodukt umfassend ein maschinenlesbares Medium und ein Computerprogramm (23) nach Anspruch 7, wobei das Computerprogramm (23) auf dem maschinenlesbaren Medium gespeichert ist.

9.  Elektronische Steuereinheit (16), die dazu angeordnet ist, in ein Kommunikationsnetzwerk (1) eines Fahrzeugs eingebunden zu sein, wobei die elektronische Steuereinheit (16) dazu ausgebildet ist, das Einleiten einer Netzwerk-Kommunikation eines Kommunikationsmodus mit anderen elektronischen Steuereinheiten des Netzwerks zu steuern, die in dem Kommunikationsmodus aktiv sind, umfassend:

Mittel zum Bestimmen eines Zeitpunkts, an dem alle elektronischen Steuereinheiten des Netzwerks, die in dem Kommunikationsmodus aktiv sein müssen, ihre Übertragung von Nachrichten nach einem Starten oder einem anderen Aufwachsignal begonnen haben;
Mittel zum Ermitteln einer spezifischen Zeitspanne, für jede Nachricht, basierend auf der längsten spezifischen Aktualisierungs-Rate für die entsprechende Nachricht und dem bestimmten Zeitpunkt, wobei die längste spezifische Aktualisierungs-Rate für die entsprechende Nachricht das längste Zeitintervall zwischen zwei aufeinanderfolgenden Übertragungen der entsprechenden Nachricht ist;
Mittel zum Überwachen von Nachrichten, die von mindestens einer anderen elektronischen Steuereinheit des Netzwerks empfangen wurden, die in dem Kommunikationsmodus aktiv sein muss;
Mittel zum Bestimmen, für jede empfangene Nachricht, ob die empfangene Nachricht von mindestens einer anderen elektronischen Steuereinheit des Netzwerks innerhalb der bestimmten spezifischen Zeitspanne empfangen worden ist (44);
Mittel zum Definieren einer Nachricht als ausgeblieben, wenn sie nicht innerhalb der bestimmten spezifischen Zeitspanne empfangen wurde (48); und
Mittel zum Erzeugen eines Diagnose-Fehlercodes für jede als ausgeblieben definierte Nachricht (50).

**Revendications**

1. Procédé de commande de lancement de communication réseau d'un mode de communication entre des unités de commande électroniques, étant actives dans ledit mode de communication, agencées dans un réseau de communication (1) d'un véhicule, comprenant les étapes de :

   - détermination d'un point dans le temps où toutes les unités de commande électroniques du réseau devant être actives dans ledit mode de communication ont commencé leur transmission de messages après la mise sous tension ou un autre signal de réveil ;
   - détermination, pour chaque message, d'une période de temps spécifique sur la base d'une durée de mise à jour spécifique la plus longue pour le message respectif et du point dans le temps déterminé, dans lequel la durée de mise à jour spécifique la plus longue pour le message respectif est l'intervalle le plus long entre deux transmissions successives du message respectif ;
   - surveillance, dans chaque unité de commande électronique (16) étant active dans ledit mode de communication, de messages reçus d'au moins une autre unité de commande dudit réseau devant être active dans ledit mode de communication ;
   - détermination, pour chaque message reçu dans chaque unité de commande (16) étant active dans ledit mode de communication, pour savoir si le message reçu a été reçu d'au moins une autre unité de commande électronique dudit réseau dans la période de temps spécifique déterminée (44) ;
   - définition d'un message comme absent s'il n'est pas reçu dans ladite période de temps spécifique déterminée (48) ; et
   - génération d'un code problème de diagnostic pour chaque message défini comme absent (50).

2. Procédé selon l'une quelconque des revendications précédentes, comprenant en outre l'étape de stockage desdits codes problème de diagnostic générés.

3. Procédé selon l'une quelconque des revendications précédentes 1 à 2, dans lequel la longueur de ladite période de temps spécifique pour un message y est

$$t_{DTC,start-up,y} \geq t_2 + x * T_y$$

où $t_{DTC,start-up,y}$ est la durée la plus courte avant que le premier code problème de diagnostic associé au message y puisse être stocké après le lancement, $t_2$ est la durée après la mise sous tension dudit réseau ou après que ledit réseau est passé dans un nouveau mode de communication, x est un nombre arbitraire entre zéro et l'infini, et $T_y$ est la durée de mise à jour spécifique la plus longue pour le message y de ladite unité de commande électronique.

4. Système de commande de lancement de communication réseau d'un mode de communication entre des unités de commande électroniques, étant actives dans ledit mode de communication, agencées dans un réseau de communication (1) d'un véhicule, comprenant :

   un moyen de détermination d'un point dans le temps où toutes les unités de commande électroniques du réseau devant être actives dans ledit mode de communication ont commencé leur transmission de messages après la mise sous tension ou un autre signal de réveil ;
   un moyen de détermination, pour chaque message, d'une période de temps spécifique sur la base d'une durée de mise à jour spécifique la plus longue pour le message respectif et du point dans le temps déterminé, dans lequel la durée de mise à jour spécifique la plus longue pour le message respectif est l'intervalle le plus long entre deux transmissions successives du message respectif ;
   un moyen de surveillance, dans chaque unité de commande électronique (16) étant active dans ledit mode de communication, de messages reçus d'au moins une autre unité de commande électronique dudit réseau devant être active dans ledit mode de communication ;

   dans lequel chaque unité de commande électronique (16) comprend un moyen de détermination, pour chaque message reçu, pour savoir si le message reçu a été reçu d'au moins une autre unité de commande électronique dudit réseau dans la période de temps spécifique déterminée (44) ;
   un moyen de définition d'un message comme absent s'il n'est pas reçu dans ladite période de temps spécifique déterminée (48) ; et
   un moyen de génération d'un code problème de diagnostic pour chaque message défini comme absent (50).

5. Système selon la revendication 4, comprenant en outre un moyen de stockage desdits codes problème de diagnostic générés.

6. Système selon la revendication 4 ou 5, dans lequel la longueur de ladite période de temps spécifique pour un message y est

$$t_{DTC,start-up,y} \geq t_2 + x * T_y$$

.

où $t_{DTC,start-up,y}$ est la durée la plus courte avant que le premier code problème de diagnostic associé au message y puisse être stocké après le lancement, $t_2$ est la durée après la mise sous tension dudit réseau ou après que ledit réseau est passé dans un nouveau mode de communication, x est un nombre arbitraire entre zéro et l'infini, et $T_y$ est la durée de mise à jour spécifique la plus longue pour le message y de ladite unité de commande électronique.

**7.** Programme informatique (23) pour une unité de commande électronique (16) agencée dans un réseau de communication (1) d'un véhicule pour commander le lancement d'une communication réseau d'un mode de communication entre l'unité de commande électronique et d'autres unités de commande électroniques agencées dans le réseau, dans lequel ledit programme comprend des instructions de programme qui, lorsqu'elles sont exécutées dans l'unité de commande électronique, font que l'unité de commande électronique exécute les étapes de :

détermination d'un point dans le temps où toutes les unités de commande électroniques du réseau devant être actives dans ledit mode de communication ont commencé leur transmission de messages après la mise sous tension ou un autre signal de réveil ;
détermination, pour chaque message, d'une période de temps spécifique sur la base d'une durée de mise à jour spécifique la plus longue pour le message respectif et du point dans le temps déterminé, dans lequel la durée de mise à jour spécifique la plus longue pour le message respectif est l'intervalle le plus long entre deux transmissions successives du message respectif ;
surveillance de messages reçus d'au moins une autre unité de commande dudit réseau devant être active dans ledit mode de communication ;
détermination, pour chaque message reçu, pour savoir si le message reçu a été reçu d'au moins une autre unité de commande électronique dudit réseau dans la période de temps spécifique déterminée (44) ;
définition d'un message comme absent s'il n'est pas reçu dans ladite période de temps spécifique déterminée (48) ; et
génération d'un code problème de diagnostic pour chaque message défini comme absent (50).

**8.** Produit de programme informatique comprenant un support lisible par un ordinateur et un programme informatique (23) selon la revendication 7, dans lequel ledit programme informatique (23) est stocké sur ledit support lisible par un ordinateur.

**9.** Unité de commande électronique (16) agencée pour être connectée dans un réseau de communication (1) d'un véhicule, ladite unité de commande électronique (16) étant apte à commander le lancement d'une communication réseau d'un mode de communication avec d'autres unités de commande électroniques du réseau, étant actives dans ledit mode de communication, comprenant :

un moyen de détermination d'un point dans le temps où toutes les unités de commande électroniques du réseau devant être actives dans ledit mode de communication ont commencé leur transmission de messages après la mise sous tension ou un autre signal de réveil ;
un moyen de détermination, pour chaque message, d'une période de temps spécifique sur la base d'une durée de mise à jour spécifique la plus longue pour le message respectif et du point dans le temps déterminé, dans lequel la durée de mise à jour spécifique la plus longue pour le message respectif est l'intervalle le plus long entre deux transmissions successives du message respectif ;
un moyen de surveillance de messages reçus d'au moins une autre unité de commande électronique dudit réseau devant être active dans ledit mode de communication ;
un moyen de détermination, pour chaque message reçu, pour savoir si le message reçu a été reçu d'au moins une autre unité de commande électronique dudit réseau dans la période de temps spécifique déterminée (44) ;
un moyen de définition d'un message comme absent s'il n'est pas reçu dans ladite période de temps spécifique déterminée (48) ; et
un moyen de génération d'un code problème de diagnostic pour chaque message défini comme absent (50).

Fig. 1

Fig. 2

Fig. 3

Fig. 4

**EP 1 662 714 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1355460 A